# EUROPÄISCHE PATENTSCHRIFT

(11) **EP 2 339 422 B1**
(45) Veröffentlichungstag und Bekanntmachung des Hinweises auf die Patenterteilung: **13.03.2013**
(21) Anmeldenummer: 10192720.0
(22) Anmeldetag: 26.11.2010
(51) Int. Cl.: G05D 16/10, B01F 3/04, A23L 2/54

(54) **Druckregel-Einheit**
Pressure control unit
Unité de réglage de pression

(30) Priorität: 18.12.2009 DE 102009054918
(43) Veröffentlichungstag der Anmeldung: 29.06.2011
(73) Patentinhaber: FiWaRec Valves & Regulators GmbH & Co. KG, 54343 Föhren (DE)
(72) Erfinder: Felten, Frank, 54313 Zemmer (DE); Bermes, Karl, 54666 Irrel (DE)
(74) Vertreter: Rau, Schneck & Hübner

(56) Entgegenhaltungen:
- EP-A1- 0 802 155
- EP-A1- 0 935 992
- GB-A- 2 190 007
- US-A- 4 940 212
- US-A- 5 417 147

## Beschreibung

Die Erfindung betrifft eine Druckregel-Einheit zur Regelung eines Fluid-Drucks, insbesondere von CO₂, sowie eine Einrichtung zur Aufbereitung von Trinkwasser mit einer derartigen Druckregel-Einheit.

Aufbereittungs-Einrichtungen für Trinkwasser sind seit längerem aus der US 4,940,212, der US 5,417,147, der GB 2 190 007 A, der EP 0 935 992 A1 und der EP 0 802 155 A1 bekannt. Ziel einer derartigen Aufbereitungs-Einrichtung ist die Zuführung von einem unter Druck befindlichen Fluid wie beispielsweise CO₂ zu Trinkwasser. Dafür wird das Fluid unter erhöhtem Druck von etwa 60 bar in einem Fluid-Behälter bereitgestellt. Es ist nachteilig, dass beim Ankoppeln derartiger Behälter an eine Aufbereitungs-Einrichtung das Fluid unkontrolliert mit erhöhtem Druck entweichen kann und deshalb Dichtungen beschädigt werden oder unbeabsichtigt von einem Dichtungs-Sitz verloren gehen. Darüber hinaus können während des Ankoppel-Vorgangs, der üblicherweise durch Einschrauben des Fluid-Behälters erfolgt, Verletzungen bei einem Bediener auftreten.

Der Erfindung liegt die Aufgabe zugrunde, eine Druckregel-Einheit in der Art zu schaffen, dass eine Ankopplung eines Fluid-Behälters an eine Einrichtung zur Aufbereitung von Trinkwasser sicher und zuverlässig möglich ist.

Diese Aufgabe wird durch die Merkmale der Ansprüche 1 und 13 gelöst. Der Kern der Erfindung besteht darin, dass mittels einer erfindungsgemäßen Druckregel-Einheit ein Ist-Druck eines zugeführten Fluids, insbesondere CO₂, auf einen vorgegebenen Soll-Druck reduziert wird, bevor das Fluid zur Aufbereitung von Trinkwasser abgegeben wird. Dazu weist die Druckregel-Einheit eine Auslöse-Vorrichtung auf, die dem Auslösen der Zuführung des Fluids in die Druckregel-Einheit dient. Über eine Eintritts-Öffnung wird das das zugeführte Fluid mit Ist-Druck in der Druckregel-Einheit aufgenommen. In einem mit der Eintritts-Öffnung verbundenen Druckregler erfolgt eine geregelte Minderung des Ist-Drucks auf den vorgegebenen Soll-Druck des Fluids, wobei anschließend das auf den Soll-Druck geminderte Fluid über eine mit dem Druckregler verbundene Austritts-Öffnung abgegeben wird. Wegen der Abgabe des Fluids bei gemindertem Soll-Druck kann vermieden werden, dass Dichtungen beschädigt oder unbeabsichtigt durch ausströmendes CO₂ bei Hochdruck aus einem Dicht-Sitz entfernt werden. Die erfindungsgemäße Druckregel-Einheit ist zuverlässig. Weiterhin folgt das Auslösen der Zuführung des Fluids in die Druckregel-Einheit nicht automatisch beim Ankoppeln eines Fluid-Behälters, insbesondere einer CO₂-Patrone, sondern wird separat von der Auslöse-Vorrichtung ermöglicht. Das bedeutet, dass bei der Druckregel-Einheit das Ankoppeln des Fluid-Behälters an die Druckregel-Einheit und die Zuführung des Fluids in zwei separaten Verfahrensschritten durchgeführt werden. Somit wird vermieden, dass während des Einschraubens des Fluid-Behälters unerwünscht und unkontrolliert Fluid austreten und zu Verletzungen eines Bedieners führen kann. Die erfindungsgemäße Druckregel-Einheit ist somit sicher.

Weitere vorteilhafte Ausgestaltungen der Erfindungen ergeben sich aus den Unteransprüchen.

Zusätzliche Merkmale und Einzelheiten der Erfindung ergeben sich aus der nachfolgenden Beschreibung von zwei Ausführungsbeispielen anhand der Zeichnung. Es zeigen:
- Fig. 1: eine Seitenansicht einer erfindungsgemäßen Druckregel-Einheit gemäß einem ersten Ausführungsbeispiel bei betätigter Auslöse-Vorrichtung,
- Fig. 2: eine der Fig. 1 entsprechende Seitenansicht mit nicht betätigter Auslöse-Vorrichtung,
- Fig. 3: einen Längsschnitt gemäß der Schnittlinie III-III in Figur 2 mit einem Druckregler in offener Stellung,
- Fig. 4: eine der Figur 3 entsprechende Darstellung mit eingesetztem Fluid-Behälter und mit geschlossenem Ventil des Fluid-Behälters,
- Fig. 5: eine perspektivische Ansicht der Druckregel-Einheit mit eingesetztem Fluid-Behälter,
- Fig. 6: einen Längsschnitt gemäß der Schnittlinie VI-VI in Fig. 5 mit dem Druckregler in geöffneter Stellung,
- Fig. 7: einen Längsschnitt gemäß der Schnittlinie VI-VI in Figur 5 mit dem Druckregler in geschlossener Stellung,
- Fig. 8: eine der Figur 7 entsprechende Darstellung bei nicht betätigter Auslöse-Vorrichtung,
- Fig. 9: eine Darstellung entsprechend der Figur 8 mit entnommenem Fluid-Behälter,
- Fig. 10: eine perspektivische Ansicht der Druckregel-Einheit gemäß einem zweiten Ausführungsbeispiel und
- Fig. 11: einen Längsschnitt gemäß der Schnittlinie XI-XI in Figur 10.

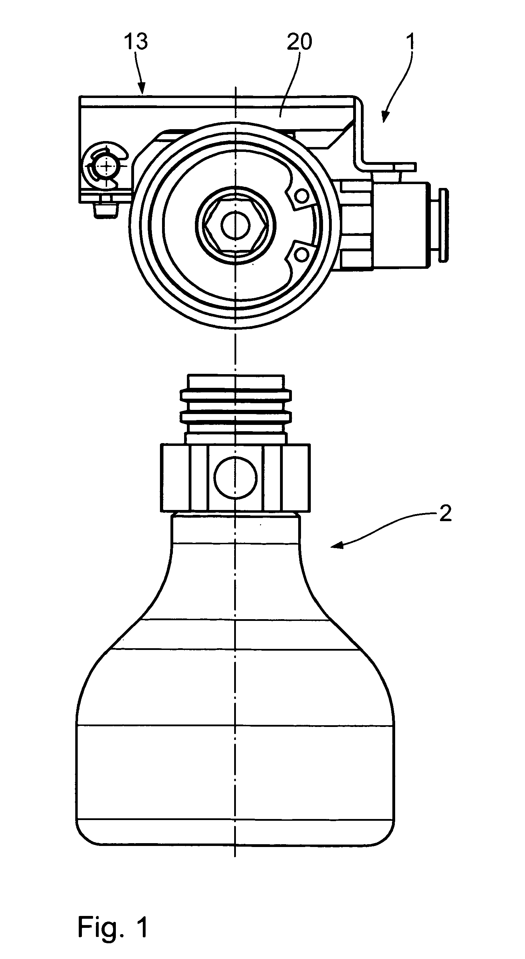

Eine in den Figuren 1 bis 9 dargestellte Druckregel-Einheit 1 ist mit einem Fluid-Behälter in Form einer CO₂-Patrone 2 durch Einschrauben koppelbar. Es sind auch andere Fluide, insbesondere Gase, als Druckmedium möglich. Ein Ventil 3 der CO₂-Patrone 2 weist ein Anschlussgewinde auf, das beispielsweise als Trapezgewinde oder als Whit-Worth-Rohrgewinde ausgebildet sein kann. Das Anschlussgewinde 4 ist als Außengewinde an einem oberen Ende des Ventils 3 angeordnet. Das Ventil 3 ist in einen Grundkörper 5 der CO₂-Patrone 2 einschraubbar, um diesen fluiddicht abzudichten. Das Ventil 3 weist eine zentrale Ausströmöffnung 6 auf, in der ein Ventil-Stift 7 mit einem daran befestigten Ventil-Teller 8 gelagert ist. An einer Stirnfläche 9 einer die Ausströmöffnung 6 begrenzenden Wandung ist ein Dicht-Sitz 10 derartig vorgesehen, dass er bei Anliegen des Ventil-Tellers 8 die Ausströmöffnung 6 fluiddicht abschließt. Im Auslieferungszustand der CO₂-Patrone 2, d. h. wenn die CO₂-Patrone 2 unter Ist-Druck pᵢₛₜ von etwa 60 bar verwendet wird, bewirkt der Ist-Druck in dem Grundkörper 5 und dem damit verbundenen Ventil 3, dass der Ventil-Teller 8 an dem Dicht-Sitz 10 abdichtend anliegt. Zwischen einer der Stirnfläche 9 gegenüberliegenden Stirnfläche der die Ausströmöffnung 6 begrenzenden Wandung und einem oberen Begrenzungsabschnitt 11 des Ventil-Stifts 7 ist eine Druckfeder 12 derart vorgesehen, dass bei einem Eindrücken des Ventil-Stifts 7 in Richtung des Grundkörpers 5 der CO₂-Patrone 2 eine entgegen der Eindrückrichtung wirkende Federkraft resultiert, sodass bei Fortfall einer äußeren Betätigungskraft des Ventil-Stifts 7 das Ventil 3 der CO₂-Patrone 2 auch dann schließt, wenn diese nicht mehr unter erhöhtem Innendruck steht.

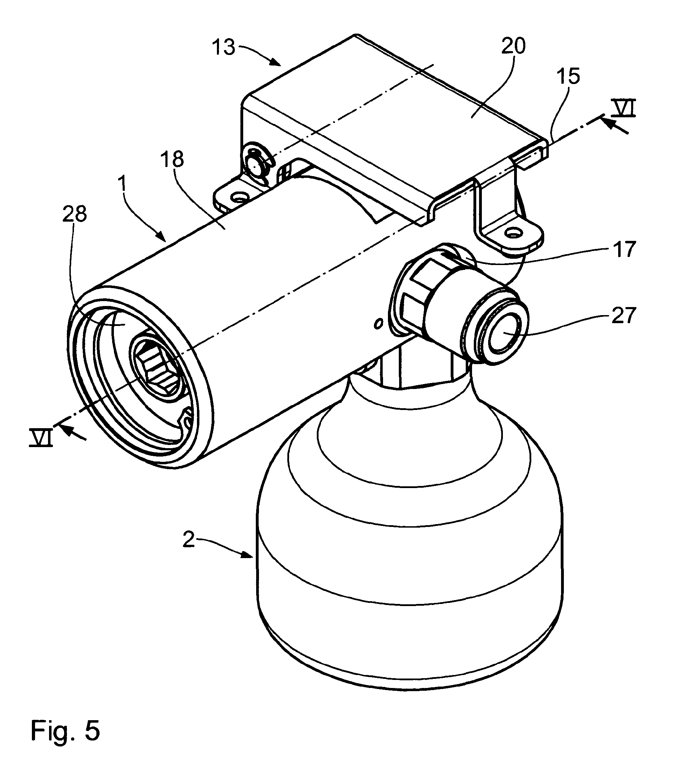

Die Druckregler-Einheit 1 umfasst eine Auslöse-Vorrichtung 13 zum Auslösen einer Zuführung des Fluids aus der CO₂-Patrone 2, also des CO₂, in die Druckregel-Einheit 1. Weiterhin umfasst die Druckregel-Einheit 1 eine Eintritts-Öffnung 14 zur Aufnahme des mit dem Ist-Druck pᵢₛₜ zugeführten CO₂, einen mit der Eintritts-Öffnung 14 verbundenen, eine Längsachse 15 aufweisenden Druckregler 16 zur geregelten Minderung des Ist-Drucks pᵢₛₜ auf einen reduzierten Soll-Druck pₛₒₗₗ des CO₂ und eine mit dem Druckregler 16 verbundene Austritts-Öffnung 17 zur Abgabe des auf den Soll-Druck pₛₒₗₗ geminderten CO₂. Die Eintritts-Öffnung 14 weist ein dem Anschlussgewinde 4 der CO₂-Patrone entsprechendes Gewinde auf, sodass die CO₂-Patrone 2 mit dem Ventil 3 in die Druckregel-Einheit 1 einschraubbar ist. Darüber hinaus ist an der Eintritts-Öffnung 14 eine Ring-Dichtung 26 zum Abdichten eines vom Gehäuse 18 umschlossenen Innenraums bei eingeschraubter CO₂-Patrone 2 vorgesehen. Die Eintritts-Öffnung 14, der Druckregler 16 und die Austritts-Öffnung 17 sind in einem gemeinsamen Gehäuse 18 angeordnet, das massiv beispielsweise als Metallgussteil ausgebildet ist. Die Austritts-Öffnung 17 ermöglicht die Abgabe des auf den Soll-Druck pₛₒₗₗ geminderten CO₂ an einen nicht dargestellten, Trinkwasser fassenden Wasserbehälter, in dem die Wasseraufbereitung erfolgt. Alternativ kann die Wasseraufbereitung, auch Imprägnierung genannt, inline erfolgen, also durch Zuführen des CO₂ zu einem in einer Wasserleitung geführten Wasserstrom. In dem ersten Ausführungsbeispiel gemäß Figur 5 ist dazu an der Austritts-Öffnung 17 ein Anschlussstück 27 vorgesehen, um einen Verbindungsschlauch von der Druckregel-Einheit 1 zu dem Wasserbehälter oder der Wasserleitung zu führen.

Die Auslöse-Vorrichtung 13 ist um eine zur Längsachse 15 parallel orientierte Schwenkachse 19 schwenkbar am Gehäuse 18 angelenkt. Die Auslöse-Vorrichtung 13 weist ein als Blechbiegeteil ausgebildetes Anschlag-Element 20 für einen Betätigungs-Stößel 21 auf, der aus einem Führungs-und Dichtungskolben 22 abgedichtet aus dem Gehäuse 18 zum Anliegen an dem Anschlag-Element 20 herausgeführt ist.

Weiterhin ist der Betätigungs-Stößel 21 in einem Verbindungs-Kanal des Gehäuses 18 angeordnet, wobei der Verbindungs-Kanal einen konzentrisch zum Betätigungs-Stößel 21 angeordneten Zuführ-Abschnitt 23 und einen damit verbundenen, konzentrisch zur Längsachse 15 angeordneten Hochdruck-Kanal 24 umfasst.

Der Führungs- und Dichtungskolben 22 ist im Wesentlichen ringförmig, also hohl ausgebildet, wobei der Betätigungs-Stößel 21 im Inneren des Führungs- und Dichtungskolbens 22 angeordnet ist. Der Betätigungs-Stößel 21 ist im Wesentlichen als zylindrischer Stab ausgebildet und weist einen Abdichtungsabschnitt 51 auf. In dem Abdichtungsabschnitt 51 ist der Betätigungs-Stößel 21 ebenfalls vollzylindrisch ausgeführt, weist jedoch einen im Vergleich zu dem übrigen Betätigungs-Stößel 21 vergrößerten Durchmesser auf. Entlang einer Betätigungsachse 25 des Betätigungs-Stößels 21 ist der Abdichtungsabschnitt 51 mit dem vergrößerten Durchmesser in der bezogen auf die Druckregel-Einheit 1 unteren Hälfte angeordnet. Der Betätigungs-Stößel 21 ist derart ausgeführt, dass der Abdichtungsabschnitt 51 entlang der Betätigungsachse 25 von Abschnitten mit gegenüber dem Abdichtungsabschnitt 51 reduziertem Durchmesser umgeben ist. Der Führungs- und Dichtungskolben 22 ist konzentrisch zur Betätigungsachse 25 des Betätigungs-Stößels 21 angeordnet. Die zentrische Bohrung 53 des Führungs- und Dichtungskolbens 22, in der der Betätigungs-Stößel 21 entlang der Betätigungsachse 25 verlagerbar angeordnet ist, weist einen Führungsabschnitt 54, einen entlang der Betätigungsachse 25 benachbarten Entlüftungsabschnitt 55 und einen entlang der Betätigungsachse 25 dem Entlüftungsabschnitt 55 benachbart angeordneten Dichtungsabschnitt 56 auf. Der Führungsabschnitt 54 weist einen gegenüber dem Entlüftungsabschnitt 55 und dem Dichtungsabschnitt 56 reduzierten Durchmesser auf. Der Innendurchmesser des Führungsabschnitts 54 des Führungs- und Dichtungskolbens 22 ist im Außendurchmesser des Betätigungs-Stößels 21 außerhalb des Abdichtungsabschnitts 51 derart angepasst, dass ein Verlagern des Betätigungs-Stößels 21 in dem Führungs- und Dichtungskolben 22 entlang der Betätigungsachse 25 geführt erfolgt. Dadurch ist gewährleistet, dass auch bei hohen Drücken innerhalb der Druckregel-Einheit und beispielsweise innerhalb des Zuführ-Abschnitts 23 ein Verkippen oder Verkanten des Betätigungs-Stößels 21 in dem Führungs- und Dichtungskolben 22 um die Betätigungsachse 25 verhindert ist.

Der Entlüftungsabschnitt 55 weist gegenüber dem Führungs-Abschnitt 54 einen vergrößerten Innendurchmesser auf, der an den Außendurchmesser des Abdichtungsabschnitts 51 des Betätigungs-Stößels 21 derart angepasst ist, dass eine Verlagerung entlang der Betätigungsachse 25 kollisionsfrei erfolgen kann. Der Dichtungsabschnitt 56 ist einem unteren, der Druckregel-Einheit 1 zugewandten Ende des Führungs- und Dichtungskolbens 22 zugewandt. Der Dichtungsabschnitt weist eine ringförmige Nut 57 auf, in die ein Dichtungselement in Form eines O-Rings 58 eingesetzt ist. Die Nut 57 und der O-Ring 58 sind derart dimensioniert, dass der O-Ring 58 einerseits in Richtung auf die Betätigungsachse 25 sicher in der Nut 57 gehalten ist. Der O-Ring 58 ist somit an dem Führungs- und Dichtungskolben 22 gesichert. Der O-Ring 58 ist ortsfest an der Druckregel-Einheit 1 angeordnet. Zudem ragt der O-Ring 58 zumindest abschnittsweise in die Bohrung 53 im Bereich des Dichtungsabschnitts 56 hinein. Der Überstand des 0-Rings 58 in die Bohrung 53 ist derart dimensioniert, dass bei Anlegen des Betätigungs-Stößels 22 mit dem Abdichtungsabschnitt 51 in dem Dichtungsabschnitt 56 des Führungs- und Dichtungskolbens, d. h. an dem 0-Ring 58, die Bohrung 53 fluiddicht abgedichtet ist.

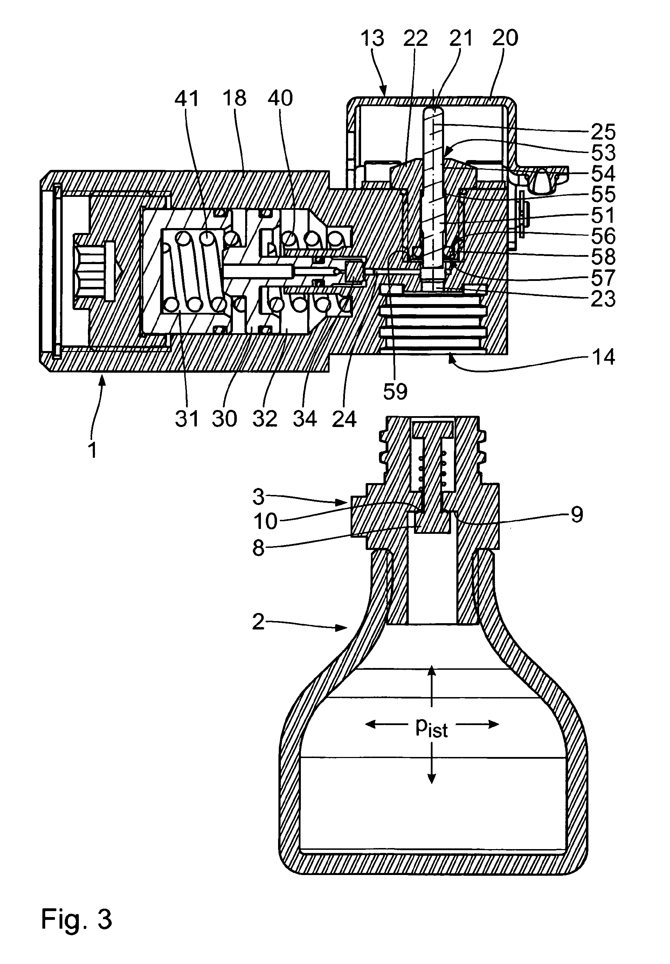

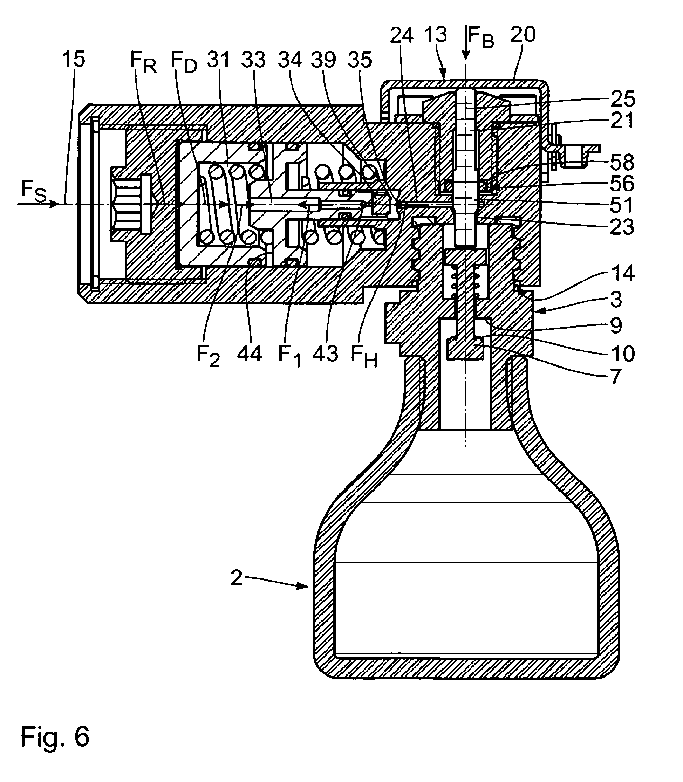

Somit ermöglicht die Auslöse-Öffnung 13 durch Verlagern des Betätigungs-Stößels 21 entlang der Betätigungsachse 25 in der Bohrung 53 des Führungs- und Dichtungskolbens 22 verschiedene Funktionen. Insbesondere ist eine Verlagerung zwischen einer in Fig. 3 gezeigten Entlüftungs-Stellung des Betätigungs-Stößels 21 und einer beispielsweise in Fig. 6 gezeigten Abdicht-Stellung möglich. Bei einer Anordnung des Betätigungs-Stößels 21 in dem Führungs- und Dichtungskolben 22 gemäß Fig. 3 in der Entlüftungs-Stellung, d. h. der Abdichtungsabschnitt 51 des Betätigungs-Stößels 21 ist in dem Entlüftungsabschnitt 55 des Führungs- und Dichtungskolbens 22 angeordnet, ist die Bohrung 53 nicht abgedichtet. Die Druckregel-Einheit 1 kann entlüftet werden. Insbesondere dichtet der 0-Ring 58 nicht den Abschnitt des Betätigungs-Stößels 21 mit reduziertem Durchmesser ab. In der gezeigten Anordnung gemäß Fig. 3 kann Fluid von dem Zuführ-Abschnitt 23 über die Bohrung 53 aus der Druckregel-Einheit 1 entweichen. Dadurch ist ein Entlüften durch Betätigen der Auslöse-Vorrichtung 13 möglich.

Der Zuführ-Abschnitt 23 ist konzentrisch zur Eintritts-Öffnung 14 und damit ebenfalls konzentrisch zu dem Ventil 3 der CO₂-Patrone 2 angeordnet. Das bedeutet, dass der Betätigungs-Stößel 21 und der Ventil-Stift 7 die gemeinsame Betätigungsachse 25 aufweisen. Der Betätigungs-Stößel 21 ist derart in dem Gehäuse 18 angeordnet, dass er durch den Zuführ-Abschnitt 23 hindurch und aus der Eintritts-Öffnung 14 herausragend positionierbar ist, wie die in Figur 3 dargestellt ist. Dadurch kann der Betätigungs-Stößel 21 auf den Begrenzungs-Abschnitt 11 des Ventil-Stifts 7 einwirken und diesen entlang der Betätigungsache 25 nach unten in Richtung des Grundkörpers 5 der CO₂-Patrone 2 verschieben. In einem drucklosen Zustand der Druckregel-Einheit 1 ist der Betätigungs-Stößel 21 in dem Führungs- und Dichtungskolben 22 entlang der Betätigungsachse 25 zwischen dem Anschlag-Element 20 und dem Ventil-Stift 7 frei beweglich.

Der Druckregler 16 umfasst eine von dem Gehäuse 18 und einem in das Gehäuse 18 eingeschraubten Einstell-Kolben 28 begrenzte Druckkammer 29, in der ein Druckregel-Kolben 30 entlang der Längsachse 15 abgedichtet verschiebbar ist. Der Druckregel-Kolben 30 teilt die Druckkammer 29 in eine Soll-Druck-Kammer 31 und eine Gegendruck-Kammer 32. Ein Druckregel-Kanal 33 ist konzentrisch in den Druckregel-Kolben 30 angeordnet. Einstückig mit dem Druckregel-Kolben 30 verbunden ist ein Verschluss-Element 34 zum Anlegen an einen Druckregel-Sitz 35. Das Verschluss-Element 34 ist somit an einem den Druckregler-Sitz 35 zugewandten Ende des Druckregel-Kolbens 30 angeordnet und verschließt damit den sonst durchgängigen Druck-Kanal 33 entlang der Längsachse 15. Der Druckregel-Kolben 30 weist einen dem Druckregel-Sitz 35 abgewandten Teller-Abschnitt 36 und einen dem Druckregel-Sitz 35 zugewandten Stangen-Abschnitt 37 auf. Der Stangen-Abschnitt 37 ist im Wesentlichen hohlzylindrisch ausgeführt, ist in einer in die Druckkammer 29 nach innen ragende Führungs-Hülse 38 abdichtend verschiebbar geführt und weist an einem den Druckregel-Sitz 35 zugewandten Ende einen gegenüber dem restlichen Stangen-Abschnitt 37 reduzierten Durchmesser auf. Also ist zwischen dem Stangen-Abschnitt 37 des Druckregel-Kolbens 30 und der Führungs-Hülse 38 der Druckkammer 29 ein rohrförmiger Hohlraum 39 gebildet. Weiterhin ist in dem Stangen-Abschnitt 37 des Druckregel-Kolbens 30 eine Querbohrung 43 vorgesehen, über die der Hohlraum 39 mit dem Druck-Kanal 33 in dem Druckregel-Kolben 30 und somit mit der Soll-Druck-Kammer 31 verbunden ist.

Der Druckregler 16 ist über den Druckregel-Sitz 35, den Hochdruck-Kanal 24 und den Zuführ-Abschnitt 23 mit der Eintritts-Öffnung 14 verbunden. Dabei ist der Betätigungs-Stößel 21 derart in dem Verbindungs-Kanal anordenbar, dass die Eintritts-Öffnung 14 gegenüber dem Druckregler 16 fluiddicht abgedichtet ist. Weiterhin kann das Verschluss-Element 34 so an dem Druckregel-Sitz 35 angeordnet sein, dass der Druckregler 16 gegenüber dem Hochdruck-Kanal 24 und damit der Eintritts-Öffnung 14 ebenfalls fluiddicht abgedichtet ist. Dazu ist eine von dem Druckregel-Kolben 30 mit dem Verschluss-Element 34 entlang der Längsachse 15 auf den Druckregel-Sitz 35 wirkende Schließkraft F_{S} auszuüben. Die Schließkraft F_{S} ist von dem Teller-Abschnitt 36 des Druckregel-Kolbens 30 zu dem Verschluss-Element 34 hin gerichtet.

In der Gegendruck-Kammer 32 ist ein erstes Feder-Element 40 zwischen dem Druckregler-Sitz 35 und dem Druckregel-Kolben 30 derart angeordnet, dass eine erste Federkraft F₁, die aus einem Zusammendrücken des ersten Feder-Elements 40 resultiert, entgegen der Schließkraft F_{S} orientiert ist. In der Gegendruck-Kammer 32 liegt ein Gegen-Druck p_{gegen} vor, der dem Atmosphärendruck pₐₜₘ entspricht. Dazu ist die Gegendruck-Kammer 32 über eine nicht dargestellte Entlüftungsbohrung an einer Unterseite des Gehäuses 18 mit der Umgebung verbunden.

In der Soll-Druck-Kammer 31 ist ein zweites Feder-Element 41 zwischen dem Druckregel-Kolben 30 und einer mit dem Einstell-Kolben 28 verbundenen Führungsschale 42 derart angeordnet, dass eine zweite Federkraft F₂ die in Richtung der Schließkraft F_{S} orientiert ist, zur Einstellung eines wirkenden Ausgangsdrucks in der Soll-Druck-Kammer 31 verwendet werden kann. Durch ein verändertes Ein- bzw. Ausschrauben des Einstell-Kolbens 28 wird die Kompression des zweiten Feder-Elements 41 und damit die zweite Federkraft F₂ auf den Druckregel-Kolben 30, mit der dieser mit dem Verschluss-Element 34 auf dem Druckregel-Sitz 35 gedrückt wird, variiert. Dadurch kann ein Ausgangsdruck in dem Hochdruck-Kanal 24, der notwendig ist, um den Druckregel-Kolben 30 mit dem Verschluss-Element 34 von dem Druckregel-Sitz 35 abzuheben, eingestellt werden. Es ist aber auch möglich, die erfindungsgemäße Druckregel-Einheit 1 ohne das zweite Feder-Element 41 auszuführen, sodass die eben beschriebene Einstellmöglichkeit des Druckregel-Kolbens 30 entfällt. In der Soll-Druck-Kammer 31 liegt der Soll-Druck pₛₒₗₗ vor, mit dem das CO₂ dem Wasserbehälter zugeführt wird.

Nachfolgend wird anhand der Figuren 1 bis 9 die Funktionsweise der erfindungsgemäßen Druckregel-Einheit 1 mit den verschiedenen Zuständen, in welchen sich die Druckregel-Einheit 1 befinden kann, näher erläutert.

Ausgehend von einer Anordnung der Druckregel-Einheit 1 in einem Ausgangszustand gemäß der Figur 1 ist die CO₂-Patrone 2 nicht an der Druckregel-Einheit 1 angeschlossen. Damit ist die Druckregel-Einheit 1 drucklos, das Anschlag-Element 20 der Auslöse-Vorrichtung 13 liegt an dem Gehäuse 18 an, sodass der Betätigungs-Stößel 21 in maximal eingefahrener Position in der Druckregel-Einheit 1 ist.

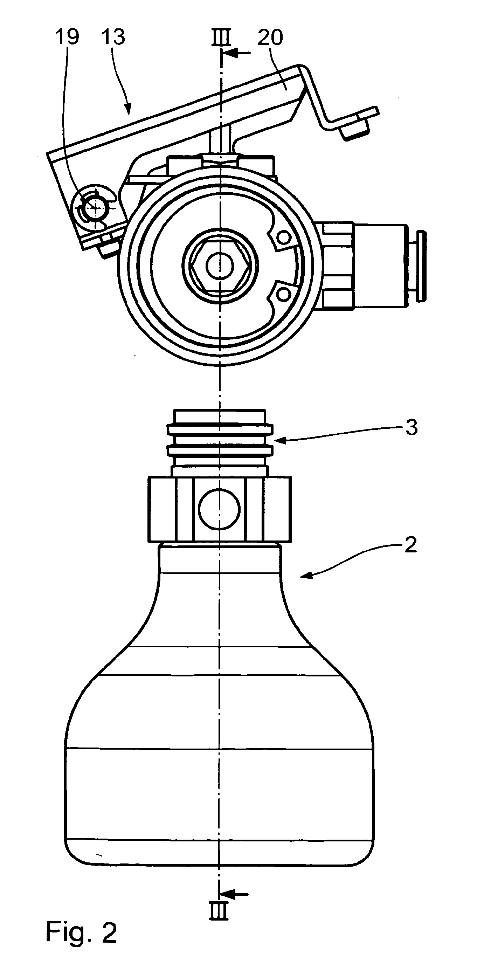

In den Figuren 2 und 3 ist das Anschlag-Element 20 der Auslöse-Vorrichtung 13 um die Schwenkachse 19 gegenüber dem Gehäuse 18 der Druckregel-Einheit 1 verschwenkt. Dadurch kann der frei bewegliche Betätigungs-Stößel 21, wie in Figur 3 gezeigt, derart in dem Führungs- und Dichtungskolben 22 angeordnet werden, dass der Betätigungs-Stößel 21 nicht in den Zuführ-Abschnitt 23 und in den Hochdruck-Kanal 24 hineinragt. Der Druckregler 16 ist somit mit der Eintritts-Öffnung 14 verbunden. In diesem Zustand ohne externe Druckeinwirkung herrscht sowohl in der Soll-Druck-Kammer 31 als auch in der Gegendruck-Kammer 32 Atmosphärendruck pₐₜₘ von etwa 1 bar, sodass der Druckregelkolben 30 aufgrund der ersten Federkraft F₁ des ersten Feder-Elements 40, die größer ist als die zweite Federkraft F₂ des zweiten Feder-Elements 41, derart angeordnet, dass das Verschluss-Element 34 beabstandet von dem Druckregel-Sitz 35 angeordnet ist. Der Druckregler 16 ist somit nicht fluiddicht gegenüber dem Hochdruckkanal 24 abgeschlossen.

In der CO₂-Patrone 2 herrscht Ist-Druck pᵢₛₜ, der vor dem Ankoppeln der Patrone 2 üblicherweise etwa 60 bar beträgt. Infolge dieser Druckeinwirkung auf den Ventil-Teller 8 wird dieser mit dem Dicht-Sitz 10 gegen die Stirnfläche 9 des Ventils 3 gedrückt, sodass die CO₂-Patrone 2 fluiddicht und damit sicher verschlossen ist. Dieser Zustand ist in Fig. 2 gezeigt.

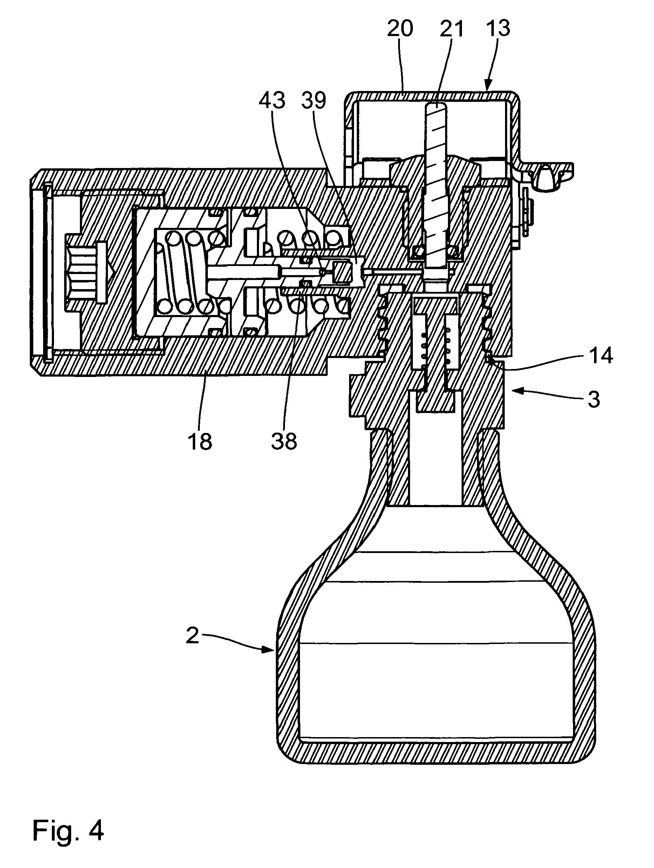

Die in Figur 4 dargestellte Konstellation unterscheidet sich von dem Zustand gemäß den Figuren 2 und 3 dahingehend, dass die CO₂-Patrone 2 mit dem Ventil 3 in der Eintritts-Öffnung 14 der Druckregel-Einheit 1 verschraubt ist. Dadurch, dass nach wie vor die Auslöse-Vorrichtung 13 gegenüber dem Gehäuse 18 um die Schwenkachse 19 verschwenkt und somit der Betätigungs-Stößel 21 nicht betätigt ist, ist das Ventil 3 der CO₂-Patrone 2 verschlossen. Das bedeutet, dass das Einschrauben der CO₂-Patrone 2 in die erfindungsgemäße Druckregel-Einheit 1 gefahrlos und zuverlässig erfolgt, da ein Ausströmen des in der CO₂-Patrone 2 bevorrateten CO₂ vermieden wird. Dementsprechend befindet sich die Druckregel-Einheit 1 analog den Darstellungen in den Figuren 1 bis 3 in einem Zustand ohne äußere Druckeinwirkung.

In einem nächsten Schritt wird, nachdem die CO₂-Patrone 2 in die Druckregel-Einheit 1 eingeschraubt ist, die Auslöse-Vorrichtung 13 betätigt, indem sie um die Schwenkachse 19 zu dem Gehäuse 18 hin verschwenkt wird (vgl. Fig. 5 und 6). Dadurch wird auf den Betätigungs-Stößel 21 durch das Anschlag-Element 20 eine Betätigungskraft F_{B} entlang der Betätigungsachse 25 ausgeübt, sodass der Betätigungs-Stößel 21 in den Hochdruck-Kanal 24 und über den Zuführ-Abschnitt 23 hinaus in die Eintritts-Öffnung 14 hineinragt. Bei der in Fig. 6 dargestellten Anordnung ist der Betätigungs-Stößel 21 mit dem Abdichtungsabschnitt 21 im Dichtungsabschnitt 56 des Führungs- und Dichtungskolbens 22 angeordnet, d. h. der 0-Ring 58 liegt mit einem Innendurchmesser abdichtend an dem Betätigungs-Stößel 21 an. Die Bohrung 53 ist fluiddicht abgedichtet. Der Betätigungs-Stößel 21 befindet sich in einer Abdicht-Stellung. In der Eintritts-Öffnung 14 befindet sich, wie insbesondere in der Figur 6 dargestellt, das Ventil 3 der CO₂-Patrone 2 mit dem darin angeordneten Ventil-Stift 7. Infolge der Betätigung des Betätigungs-Stößels 21 wird der Ventil-Stift 7 nach unten in Richtung des Grundkörpers 5 der CO₂-Patrone 2 bewegt, sodass der Dicht-Sitz 10 von der Stirnfläche 9 abgehoben wird. In diesem Zustand ist das Ventil 3 der CO₂-Patrone 2 geöffnet, sodass das in der CO₂-Patrone 2 bevorratete CO₂ über die Ausström-Öffnung 6 aus dem Grundkörper 5, die Eintritts-Öffnung 14, den Zuführ-Abschnitt 23 und den Hochdruck-Kanal 24 in den Druckregler 16 strömen kann.

Sobald das CO₂ mit Ist-Druck pᵢₛₜ in die Druckkammer 29 einströmt, wird, sofern dies im Ausgangszustand der Druckregel-Einheit 1 nicht der Fall ist, aufgrund des über den Hochdruck-Kanal 24 auf das Verschluss-Element 34 wirkenden Drucks der Druckregel-Kolben 30 mit dem Verschluss-Element 34 von dem Druckregel-Sitz 35 abgehoben, sodass der Hohlraum 39, in den das CO₂ mit Ist-Druck pᵢₛₜ einströmt, vergrößert wird. Über die senkrecht zur Längsachse 15, radial aus den Stangen-Abschnitt 37 des Druckregel-Kolbens 30 nach außen führenden Querbohrungen 43, strömt das CO₂ durch den Druckregel-Kanal 33 in die Soll-Druck-Kammer 31. In diesem Moment, in dem das CO₂ beginnt, in die Druckkammer 29 des Druckreglers 16 zu strömen, wirken auf den Druckregel-Kolben 30 zum einen eine Hochdruckkraft F_{H}, die sich als Resultierende aus dem auf eine Querschnittsfläche des Stangen-Abschnitts 37 wirkenden Ist-Drucks pᵢₛₜ ergibt, und zum anderen die erste Federkraft F₁, wobei beide Kräfte F_{H}, F₁ entlang der Längsachse 15 derart auf den Druckregel-Kolben 30 wirken, dass das Verschluss-Element 34 von dem Druckregel-Sitz 35 wegbewegt wird. Gleichzeitig wirkt diesen Kraftkomponenten F₁, F_{H} die zweite Federkraft F₂ sowie eine Reibkraft F_{R} entgegen, die infolge der Bewegung des abgedichtet geführten Druckregel-Kolbens 30 entsteht. Solange der Druckregel-Kolben 30 mit dem Verschluss-Element 34 weg vom Druckregel-Sitz 35 bewegt wird, wirkt die Reibkraft F_{R} den Kraftanteilen F₁, F_{H} entgegen und entsprechend umgekehrt. Weiterhin wirkt eine Druckregler-Kraft F_{D} gleich orientiert wie die zweite Federkraft F₂, wobei die Druckregler-Kraft F_{D} als Resultierende des in der Soll-Druck-Kammer 31 wirkenden Soll-Drucks pₛₒₗₗ auf eine hintere Stirnfläche 44 des Teller-Abschnitts 36 des Druckregel-Kolbens 30 ist. Je mehr CO₂ aus der CO₂-Patrone 2 in den Druckregler 16 einströmt, desto größer ist der Soll-Druck in der Soll-Druck-Kammer 31. Dadurch, dass die hintere Stirnfläche 44 gegenüber der Querschnittsfläche des Stangen-Abschnitts 37, auf den die Hochdruck-Kraft F_{H} wirkt, wesentlich vergrößert ist, wird ein Kräftegleichgewicht, bei dem sich die Kraftanteile F₂ und F_{D} mit F₁ und F_{H} gegenseitig egalisieren, erreicht, obwohl der Soll-Druck pₛₒₗₗ deutlich geringer ist als der Ist-Druck pᵢₛₜ in dem Grundkörper 5 der CO₂-Patrone 2 und in dem Hohlraum 39. In diesem Zustand ist die Schließkraft F_{S} gleich Null. In diesem Gleichgewichtszustand verschwindet auch die Reibkraft F_{R}. Mit der erfindungsgemäßen Druckregel-Einheit 1 ist es möglich, den Ist-Druck pᵢₛₜ in der CO₂-Patrone 2 auf den Soll-Druck pₛₒₗₗ in der Soll-Druck-Kammer 31 in Abhängigkeit der Position des Einstell-Kolbens 28 auf etwa 1 bis 8 bar zu reduzieren.

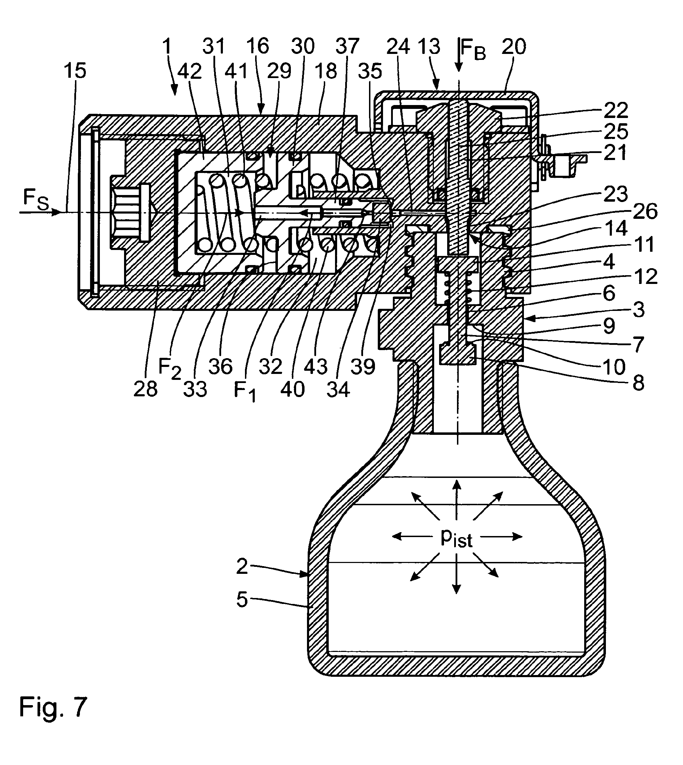

Sobald nach Erreichen des Kräftegleichgewichts weiteres CO₂ in die Druckkammer 29 einströmt, wird der Soll-Druck pₛₒₗₗ in der Soll-Druck-Kammer 31 und damit die Druckregler-Kraft F_{D} weiterhin erhöht, sodass die Summe aus F₂ und F_{D} größer ist als die Summe aus F₁ und F_{H} die Schließkraft F_{S} auf den Druckregel-Kolben 30 derart wirkt, dass das Verschluss-Element 34 auf den Druckregel-Sitz 35 gedrückt wird. Sobald dieser Fall eintritt, wird der Druckregel-Kolben 30 mit dem Verschluss-Element 34 auf den Druckregel-Sitz 35 angeordnet, sodass der Druckregler 16 gegenüber dem Hochdruck-Kanal 24 fluiddicht abgedichtet ist. In diesem Zustand, der in Figur 7 dargestellt ist, ist die erfindungsgemäße Druckregel-Einheit 1 betriebsbereit und steht unter Druck.

Für den Fall, dass das unter Soll-Druck pₛₒₗₗ stehende CO₂ an den angeschlossenen Wasserbehälter abgeführt wird, sinkt der Soll-Druck pₛₒₗₗ in der Soll-Druck-Kammer 31, sodass das Kräftegleichgewicht, das auf den Druckregel-Kolben 30 wirkt, derart verändert wird, der Druckregel-Kolben 30 mit dem Verschluss-Element 34 von dem Druckregel-Sitz 35 abhebt und wieder eine Position einnimmt, wie sie in Figur 6 dargestellt ist. In diesem Zustand kann wieder CO₂ aus der CO₂-Patrone 2 in den Druckregler 16 nachströmen, bis der geforderte Soll-Druck pₛₒₗₗ erreicht ist und der Druckregel-Kolben 30 den Hochdruck-Kanal 24 verschließt. Der in Figur 6 gezeigte Zustand liegt aber beispielsweise auch dann vor, wenn die CO₂-Patrone 2 vollständig entleert ist und das System, das die Druckregel-Einheit 1 und die CO₂-Patrone 2 umfasst, ausgeglichene Druckverhältnisse aufweist.

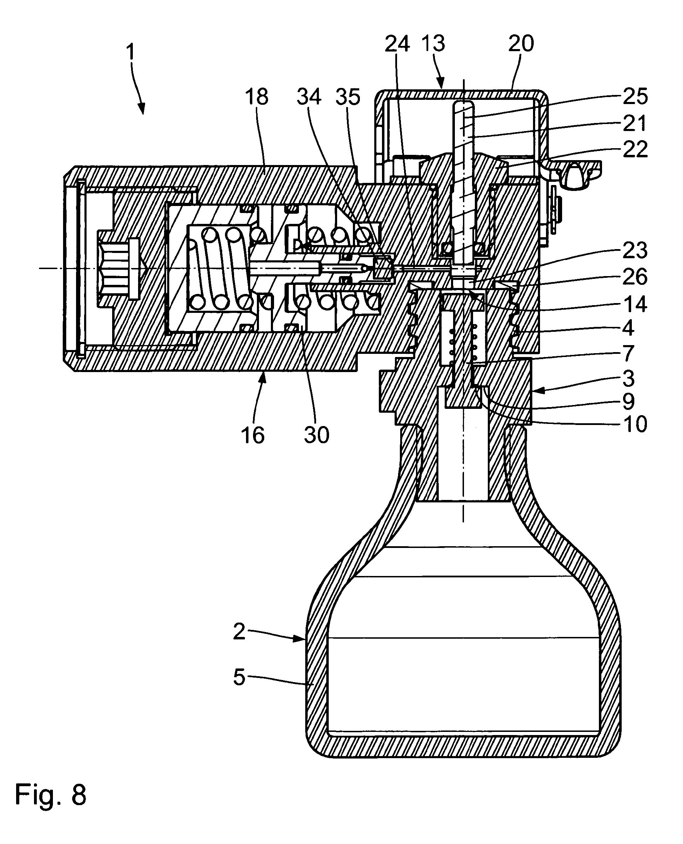

Der Zustand der erfindungsgemäßen Druckregel-Einheit 1 mit der eingeschraubten CO₂-Patrone 2 im Fall eines notwendigen Patronentausches ist in Figur 8 gezeigt. Dazu wird zunächst bei dem unter Druck stehenden System aus Druckregel-Einheit 1 und CO₂-Patrone 2 die Auslöse-Vorrichtung 13 betätigt und um die Schwenkachse 19 von dem Gehäuse 18 weg verschwenkt. Aufgrund des herrschenden Drucks in dem Zuführ-Abschnitt 23 und in dem Hochdruck-Kanal 24 und dem Lösen des Anschlag-Elements 20 wird der Betätigungs-Stößel 21 entlang der Betätigungs-Achse 25 in dem Führungs- und Dichtungskolben 22 nach oben bewegt. Somit ist der Betätigungs-Stößel 21 nicht mehr in der Eintritts-Öffnung 14, dem Zuführ-Abschnitt 23 und dem Hochdruck-Kanal 24 angeordnet. Insbesondere ist der Betätigungs-Stößel 21 auch aus dem Ventil der CO₂-Patrone 2 entfernt, sodass keine Betätigungskraft F_{B} auf den Ventil-Stift 7 des Ventils 3 einwirkt. Gleichzeitig kann das Rest-CO₂ in dem Zuführ-Abschnitt 23 und in dem Hochdruck-Kanal 24 über die zentrale Öffnung des Führungs- und Dichtungskolbens 22 entweichen, da der Betätigungs-Stößel 21 in der nicht betätigten Stellung gemäß Figur 8 diese Öffnung in dem Führungs- und Dichtungskolben 22 nicht abdichtet. Es ist also möglich, dass über die Bohrung 53 in dem Führungs- und Dichtungskolben 22 die Druckregel-Einheit 1 entlüftet wird. Das Entlüften wird dadurch ermöglicht, dass das Anschlag-Element 20 um die Schwenkachse 19 verschwenkt wird und somit eine Verlagerung des Betätigungs-Stößels 21 entlang der Betätigungsachse 25 ermöglicht ist. Das Entlüften erfolgt ausgehend von dem Zuführ-Abschnitt 23 und/oder dem Hochdruck-Kanal 24 an dem nicht in einer abdichtenden Stellung in der Bohrung 53 angeordneten Betätigungs-Stößel 21.

Dadurch, dass der O-Ring 58 in der Nut 57 des Führungs- und Dichtungskolbens 22 angeordnet ist, ist der O-Ring 58 sicher und vor allem ortsfest an dem Führungs- und Dichtungskolben 22 gehalten. Insbesondere ist der O-Ring 58 gegen ein Austreiben aus dem Grundkörper 5 bei einem Entlüften gesichert. Die axiale Verlagerung des Betätigungs-Stößels 21 entlang der Betätigungsachse 25 führt nicht dazu, dass der O-Ring 58 aus der Nut 57 entfernt wird. Insofern ist verhindert, dass der O-Ring 58 bei der Montage oder Demontage einer CO₂-Patrone aus der Druckregel-Einheit 1 herausgeschleudert oder zerstört wird. Insofern sind auch Leckströme mit einem erhöhten, nicht kontrollierbaren Druck beim Entlüften der Druckregel-Einheit vermieden, die zu einer Verletzung eines Benutzers führen könnten. Eine Querwand 59 des Grundkörpers 5 kann als Anschlag für den 0-Ring 58 dienen.

Eine abgedichtete Anordnung des Betätigungs-Stößels 21 in dem Führungs- und Dichtungskolben 22 liegt in dem betätigten Zustand des Betätigungs-Stößels 21 vor, da der Betätigungs-Stößel 21 mit dem Abdichtungsabschnitt 51 in dem Dichtungsabschnitt 56 des Führungs- und Dichtungskolbens 22 angeordnet ist. Dadurch, dass der Ventil-Stift 7 nicht mehr betätigt wird, und in dem Verbindungs-Kanal 23, 24 ein Druckverlust wegen der Entlüftung über den Führungs- und Dichtungskolben 22 eintritt, wird das Ventil 3 durch Anliegen des Dicht-Sitzes 10 an der Stirnfläche 9 wegen des Ist-Drucks pᵢₛₜ in dem Grundkörper 5 geschlossen. Dadurch, dass das Ventil 3 in der Eintritts-Öffnung 14 mit der Ringdichtung 26 abgedichtet ist, kann das Rest-CO₂ nicht über das Anschlussgewinde 4 ungewollt nach außen strömen. In der in Figur 8 gezeigten Anordnung ist die CO₂-Patrone sicher und zuverlässig verschlossen und kann anschließend durch einfaches Herausdrehen aus der Eintritts-Öffnung 14 entnommen werden.

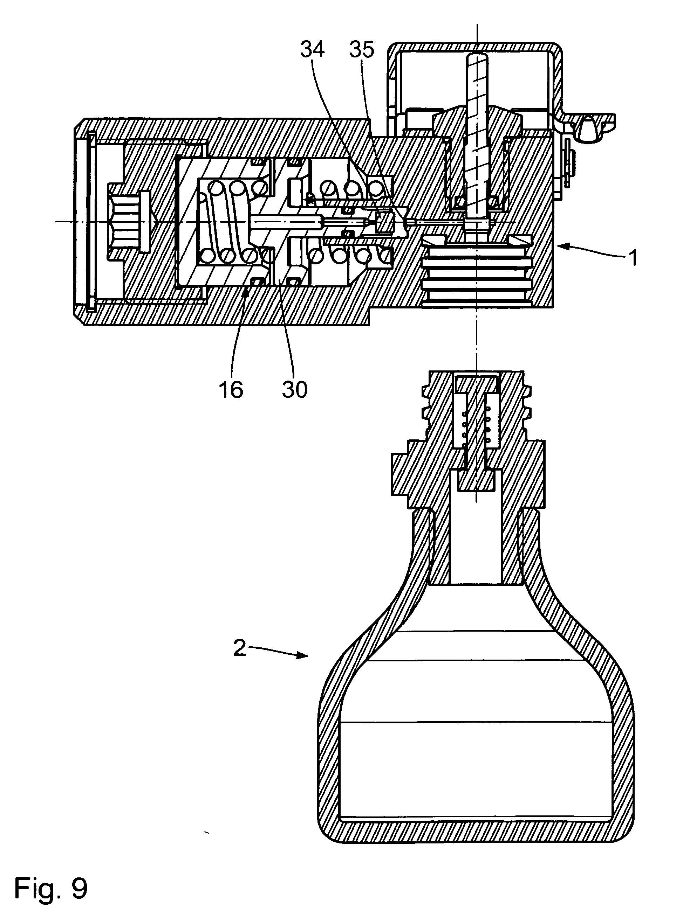

Der abschließende Zustand, in dem die CO₂-Patrone 2 aus der Druckregel-Einheit 1 ausgeschraubt ist, ist in Figur 9 dargestellt. Die Tatsache, dass der Druckregler 16 in einem geschlossenem Zustand ist, d. h. das Verschluss-Element 34 des Druckregel-Kolbens 30 gegen den Druckregel-Sitz 35 gedrückt ist, zeigt, dass zum Zeitpunkt des Lösens der Auslöse-Vorrichtung 13 die Druckregel-Einheit 1 unter Druck stand. Das bedeutet, dass die ausgetauschte CO₂-Patrone 2 nicht restlos entleert ist und einen Ist-Druck pᵢₛₜ aufweist, der größer ist als der Atmosphärendruck pₐₜₘ. Andernfalls wäre der Druckregler 16 in einer geöffneten Position wie beispielsweise in Figur 3 dargestellt.

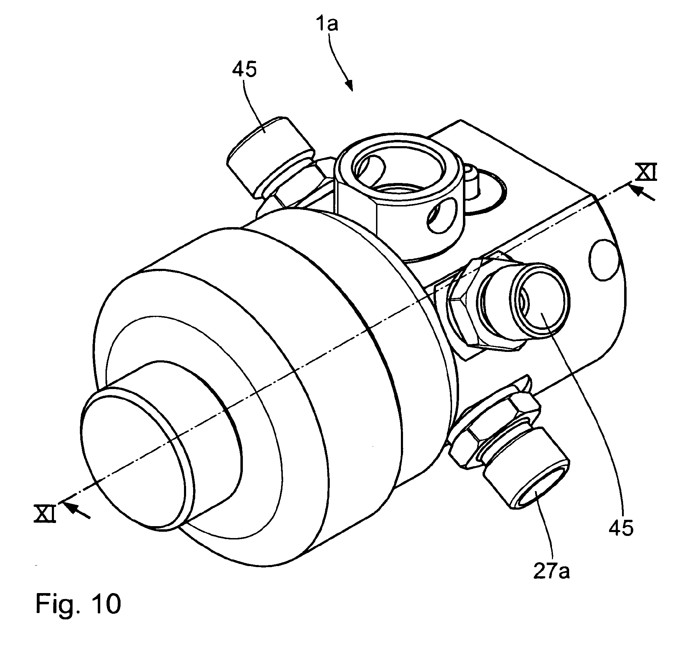

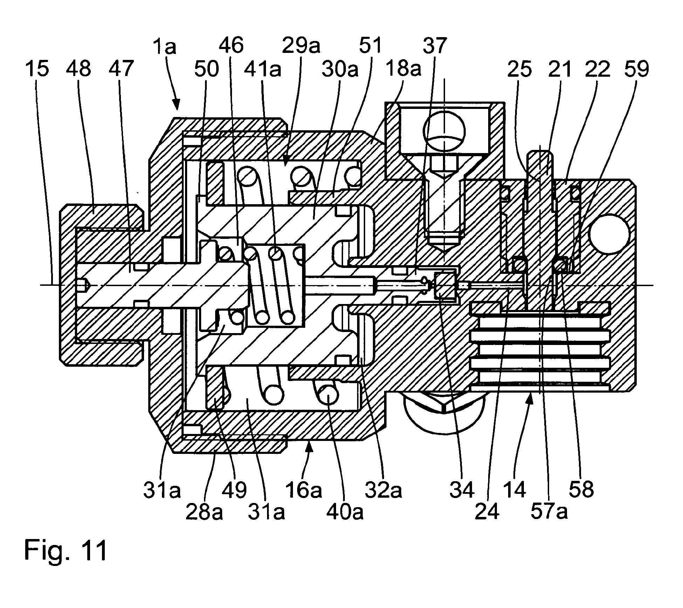

Im Folgenden wird unter Bezugnahme auf die Figuren 10 und 11 ein weiteres Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass in der Gegendruck-Kammer 32a des Druckreglers 16a ein einstellbarer Wasserdruck p_{wasser} als Gegendruck p_{gegen} vorliegt. Diese Ausführungsform ist besonders vorteilhaft, da dadurch ein konstanter Differenzdruck Δp zwischen dem Ist-Druck pᵢₛₜ des CO₂ zu dem Wasserdruck p_{wasser} einstellbar ist. Dazu ist die Gegendruck-Kammer 32a mit einer nicht dargestellten Zugangsbohrung versehen, über die eine Beaufschlagung mit Wasserdruck p_{wasser} erfolgt.

Aus Darstellungsgründen sind in den Figuren 10 und 11 die CO₂-Patrone 2 und das Anschlag-Element 20 der Auslöse-Vorrichtung 13 nicht dargestellt. Wie bei dem ersten Ausführungsbeispiel ist die Nut 57a des Führungs- und Dichtungskolbens 22 endseitig an dem Kolben 22 ausgeführt, d. h. der Führungs- und Dichtungskolben 22 weist eine nach innen versetzte Schulter als Nut 57a auf. Der O-Ring 58 ist in der Nut 57a gegen eine Verlagerung in Richtung der Eintritts-Öffnung 14 dadurch gehalten, dass eine Querwand 59 des Grundkörpers 5 der Druckregel-Einheit 1a als Anschlag für den O-Ring 58 dient. Die Funktionsweise und insbesondere das Zusammenwirken des Betätigungs-Stößels 21 und des Führungs- und Dichtungskolbens 22 zum Abdichten der Bohrung 53 und zum Entlüften der Druckregel-Einheit 1a erfolgt analog dem ersten Ausführungs-Beispiel, worauf hiermit verwiesen wird.

Die Druckregel-Einheit 1a weist mehrere Anschlussstücke 27a für eine Zuoder Ableitung des bei Soll-Druck pₛₒₗₗ befindlichen CO₂ auf. Darüber hinaus sind weitere Anschluss-Elemente 45 vorgesehen, um zusätzlich CO₂ mit Ist-Druck pᵢₛₜ zuzuführen.

In dem Druckregler 16a sind die Soll-Druck-Kammer 31a und die Gegendruck-Kammer 32a konzentrisch zu der Längsachse 15 angeordnet. Das zweite Federelement 41a ist in einer dafür vorgesehenen Ausnehmung 46 in dem dem Verschluss-Element 34 abgewandten Ende des Druckregel-Kolbens 30a angeordnet. Dementsprechend ist der Teller-Abschnitt 36a des Druckregel-Kolbens 30a im Wesentlichen topfförmig ausgeführt.

Eine Vorspannung des Druckregel-Kolbens 30a erfolgt gemäß diesem Ausführungsbeispiel über den Einstell-Kolben 28a, der auf das Gehäuse 18a aufgeschraubt ist, und über einen Einstell-Zapfen 47, der mittels einer auf den Einstell-Kolben 28a aufgeschraubten Verschluss-Kappe 48 mit dem Einstell-Kolben 28a verbunden ist.

In dem abgeschlossenen Zustand des Druckreglers 16a, also wenn das Verschluss-Element 34 an dem Druckregel-Sitz 35 abdichtet, liegt der Druckregel-Kolben 30a mit einer umlaufenden Schulter 50 an einem mit dem Gehäuse 18a fest verbundenen Haltering 49 an. In dieser Position ist die Soll-Druck-Kammer 31a in zwei von einander getrennte Teil-Kammern unterteilt. Sobald der Druckregler 16a geöffnet wird, hebt das Verschluss-Element 34 vom Druckregler-Sitz 35 und der Druckregel-Kolben 30a mit seiner Schulter 50 von dem Haltering 49 ab, so dass die beiden Teil-Kammern in Verbindung stehen.

Die Druckkammer 29a weist eine ringförmige Wandung 51 auf, in der der Druckregel-Kolben 30a mit dem Teller-Abschnitt 36a abdichtend geführt ist. Entsprechend ist die Gegendruck-Kammer 32a von dem Druckregel-Kolben 30a und dem Teller-Abschnitt 36a begrenzt.

Die Funktionsweise der Druckregel-Einheit 1a ist analog dem ersten Ausführungsbeispiel der Druckregel-Einheit 1, worauf hiermit verwiesen wird.

## Patentansprüche

1. Druckregel-Einheit zur Regelung eines Fluid-Drucks, insbesondere von CO₂, umfassend
a. eine Auslöse-Vorrichtung (13) zum Auslösen einer Zuführung des Fluids in die Druckregel-Einheit (1; 1a),
b. eine Eintritts-Öffnung (14) zur Aufnahme des mit Ist-Druck (Pᵢₛₜ) zugeführten Fluids,
c. einen mit der Eintritts-Öffnung (14) verbundenen, eine Längsachse (15) aufweisenden Druckregler (16; 16a) zur geregelten Minderung des Ist-Drucks (pᵢₛₜ) auf einen Soll-Druck (pₛₒₗₗ) des Fluids und
d. eine mit dem Druckregler (16; 16a) verbundene Austritts-öffnung (17) zur Abgabe des auf den Soll-Druck (pₛₒₗₗ) geminderten Fluids,
e. wobei die Auslöse-Vorrichtung (13) einen Betätigungs-Stößel (21) und ein Anschlag-Element (20) für den Betätigungs-Stößel (21) aufweist,
**dadurch gekennzeichnet, dass**
- der Betätigungs-Stößel (21) in einer Bohrung (53) eines Führungs- und Dichtungskolbens (22) entlang einer Betätigungsachse (25) zwischen einer betätigten Abdicht-Stellung und einer nicht betätigten Entlüftungs-Stellung verlagerbar ist, und
- an der Druckregel-Einheit (1) ein O-Ring (58) ortsfest angeordnet ist zum fluiddichten Abdichten der Bohrung (53).

2. Druckregel-Einheit gemäß Anspruch 1, **dadurch gekennzeichnet, dass** der Druckregler (16; 16a) über einen Druckregler-Sitz (35) und einen Verbindungs-Kanal (23, 24) mit der Eintritts-Öffnung (14) verbunden ist.

3. Druckregel-Einheit gemäß einem der vorangehenden Ansprüche, **dadurch gekennzeichnet, dass** die Auslöse-Vorrichtung (13) um eine zur Längsachse (15) parallele Schwerlkachse (19) schwenkbar an einem Gehäuse (18; 18a) der Druckregel-Einheit (16; 16a) angelenkt ist.

4. Druckregel-Einheit gemäß einem der vorangehenden Ansprüche, **dadurch gekennzeichnet, dass** der Druckregler (16; 16a) eine Druckkammer (29; 29a) aufweist, in der ein Druckregel-Kolben (30; 30a) entlang der Längsachse (15) abgedichtet verschiebbar ist.

5. Druckregel-Einheit gemäß Anspruch 4, **dadurch gekennzeichnet, dass** der Druckregel-Kolben (30; 30a) durch Ausüben einer entlang der Längsachse (15) wirkenden Schließkraft (Fₛ) derart in der Druckkammer (29; 29a) anordenbar ist, dass er den Verbindungs-Kanal (23, 24) fluiddicht abschließt.

6. Druckregel-Einheit gemäß einem der Ansprüche 4 oder 5, **dadurch gekennzeichnet, dass** die Druckkammer (29; 29a) eine Soll-Druck-Kammer (31; 31a) mit dem Soll-Druck (pₛₒₗₗ) und eine Gegendruck-Kammer (32; 32a) mit einem Gegen-Druck (P_{gegen}) aufweist, wobei die Kammern (31, 32; 31 a, 32a) durch einen in dem Druckregel-Kolben (30; 30a) vorgesehenen Druckregel-Kanal (33) miteinander verbindbar sind.

7. Druckregel-Einheit gemäß Anspruch 6, **dadurch gekennzeichnet, dass** in der Gegendruck-Kammer (32; 32a) ein erstes Feder-Element (40; 40a) zwischen dem Druckregler-Sitz (40; 40a) und dem Druckregel-Kolben (30; 30a) derart angeordnet ist, dass eine erste Federkraft (F₁) entgegen der Schließkraft (F_{S}) orientiert ist.

8. Druckregel-Einheit gemäß einem der Ansprüche 6 oder 7, **dadurch gekennzeichnet, dass** in der Soll-Druck-Kammer (31; 31a) ein zweites Feder-Element (41; 41 a) zwischen dem Druckregel-Kolben (30; 30a) und einem Einstell-Kolben (28; 28a) derart angeordnet ist, dass eine zweite Federkraft (F₂) in Richtung der Schließkraft (Fₛ) orientiert ist und zur Einstellung eines wirkenden Ausgangsdrucks in der Soll-Druck-Kammer (31; 31 a) dient.

9. Druckregel-Einheit gemäß einem der Ansprüche 6 bis 8, **gekennzeichnet durch** Atmosphärendruck (pₐₜₘ) als Gegen-Druck (p_{gegen}).

10. Druckregel-Einheit gemäß einem der Ansprüche 6 bis 8, **dadurch gekennzeichnet, dass** der Gegen-Druck (p_{gegen}) ein einstellbarer Wasserdruck (p_{wasser}) ist.

11. Druckregel-Einheit gemäß einem der vorangehenden Ansprüche, **dadurch gekennzeichnet, dass** der Druckregler (16; 16a), die Eintritts-Öffnung (14) und die Austritts-Öffnung (17) in dem Gehäuse (18; 18a) angeordnet sind.

12. Druckregel-Einheit gemäß einem der vorangehenden Ansprüche, **dadurch gekennzeichnet, dass** die Bohrung (53) in der Abdicht-Stellung fluiddicht abgedichtet ist und in der Entlüftungs-Stellung einen Fluidstrom durch die Bohrung (53) aus der Druckregel-Einheit (1; 1 a) zum Entlüften ermöglicht.

13. Einrichtung zur Aufbereitung von Trinkwasser, umfassend
a. eine Druckregel-Einheit (1; 1 a) gemäß einem der vorangehenden Ansprüche zur Abgabe des auf den Soll-Druck (pₛₒₗₗ) geminderten Fluids und
b. einen an die Druckregel-Einheit (1; 1 a) gekoppelten Fluid-Behälter zur Zuführung des Fluids mit Ist-Druck (pᵢₛₜ).

## Claims

1. Pressure control unit for controlling a fluid pressure, in particular of CO₂, comprising
a. an activating device (13) for activating a supply of fluid into the pressure control unit (1; 1a),
b. an inlet opening (14) for taking in the fluid supplied at actual pressure (P_{act}),
c. a pressure controller (16; 16a) connected to the inlet opening (14) with a longitudinal axis (15) for reducing the actual pressure (P_{act}) in a controlled manner to a desired pressure (p_{des}) of fluid and
d. an outlet opening (17) connected to the pressure controller (16; 16a) for outputting the fluid reduced to the desired pressure (p_{des}),
e. wherein the activating device (13) comprises an activating ram (21) and a stop element (20) for the activating ram (21),
**characterised in that**
- the activating ram (21) in a bore (53) of a guiding and sealing piston (22) can be displaced along an activating axis (25) between an activated sealing position and a non-activated venting position and
- an O-ring is fixed onto the pressure regulating unit (1) for sealing the bore (53) in a fluid-tight manner.

2. Pressure control unit according to claim 1, **characterised in that** the pressure controller (16; 16a) is connected by a pressure controller seat (35) and a connecting channel (23, 24) to the inlet opening (14).

3. Pressure control unit according to one of the preceding claims, **characterised in that** the activating device (13) is articulated pivotably about a pivot axis (19) parallel to the longitudinal axis (15) on a housing (18; 18a) of the pressure control unit (16; 16a).

4. Pressure control unit according to one of the preceding claims, **characterised in that** the pressure controller (16; 16a) comprises a pressure chamber (29; 29a) in which a pressure control piston (30; 30a) can be displaced sealed along the longitudinal axis (15).

5. Pressure control unit according to claim 4, **characterised in that** the pressure control piston (30; 30a) by exerting a closing force (F_{S}) acting along the longitudinal axis (15) can be arranged in the pressure chamber (29; 29a) such that it seals the connecting channel (23, 24) in a fluid-tight manner.

6. Pressure control unit according to one of claims 4 or 5, **characterised in that** the pressure chamber (29; 29a) comprises a desired pressure chamber (31; 31a) with the desired pressure (p_{des}) and a counter pressure chamber (32; 32a) with a counter pressure (p_{counter}), wherein the chambers (31, 32; 31a, 32a) can be connected together by a pressure control channel (33) provided in the pressure control piston (30; 30a).

7. Pressure control unit according to claim 6, **characterised in that** in the counter pressure chamber (32; 32a) a first spring element (40; 40a) is arranged between the pressure controller seat (40; 40a) and the pressure control piston (30; 30a) such that a first spring force (F₁) is oriented against the closing force (Fₛ).

8. Pressure control unit according to any one of claims 6 or 7, **characterised in that** in the desired pressure chamber (31; 31a) a second spring element (41; 41a) is arranged between the pressure control piston (30; 30a) and an adjusting piston (28; 28a) such that a second spring force (F₂) is oriented in the direction of the closing force (F_{S}) and is used for adjusting an effective output pressure in the desired pressure chamber (31; 31a).

9. Pressure control unit according to one of claims 6 to 8, **characterised by** atmospheric pressure (pₐₜₘ) as the counter pressure (P_{counter}).

10. Pressure control unit according to one of claims 6 to 8, **characterised in that** the counter pressure (P_{counter}) is an adjustable water pressure (P_{water}).

11. Pressure control unit according to one of the preceding claims, **characterised in that** the pressure controller (16; 16a), the inlet opening (14) and the outlet opening (17) are arranged in the housing (18; 18a).

12. Pressure control unit according to one of the preceding claims, **characterised in that** the bore (53) is sealed fluid-tight in the sealing position and in the venting position allows the flow of fluid through the bore (53) out of the pressure control unit (1; 1a) for venting.

13. Device for the preparation of drinking water comprising
a. a pressure control unit (1; 1a) according to one of the preceding claims for delivering the fluid reduced to the desired pressure (P_{des}) and
b. a fluid container coupled to the pressure control unit (1; 1a) for supplying the fluid with actual pressure (P_{act}).

## Revendications

1. Unité de réglage de pression pour le réglage de la pression d'un fluide, en particulier de la pression de CO₂, comprenant
a. un dispositif de libération (13) pour la libération d'une alimentation du fluide dans l'unité de réglage de pression (1 ; 1a),
b. un orifice d'entrée (14) pour l'admission du fluide alimenté à une pression réelle (pᵢₛₜ),
c. un régulateur de pression (16 ; 16a) relié avec l'orifice d'entrée (14), présent sur l'axe longitudinal (15), pour la réduction réglée de la pression réelle (pᵢₛₜ) à une pression souhaitée (pₛₒₗₗ) du fluide, et
d. un orifice de sortie (17) relié au régulateur de pression (16 ; 16a) pour l'évacuation du fluide dont la pression est minorée à la pression souhaitée (pₛₒₗₗ),
e. le dispositif de libération (13) présentant un pilon d'actionnement (21) et un élément de butée (20) pour le pilon d'actionnement (21),
**caractérisée en ce que**
- le pilon d'actionnement (21) peut être déplacé dans un alésage (53) d'un piston de guidage et d'étanchéité (22) le long d'un axe d'actionnement (25) entre une position actionnée étanche et une position de purge non actionnée et
- qu'un anneau en O (58) est disposé, sans pouvoir bouger, sur l'unité de réglage de pression (1) pour rendre l'alésage (53) étanche aux fluides.

2. Unité de réglage de pression selon la revendication 1 **caractérisée en ce que** le régulateur de pression (1 ; 1a) est relié avec l'orifice d'entrée (14) par l'intermédiaire d'un siège de régulateur de pression (35) et un canal de liaison (23, 24).

3. Unité de réglage de pression selon l'une des revendications précédentes **caractérisée en ce que** le dispositif de libération (13) est articulé, pouvant pivoter autour d'un axe de pivotement (19) parallèle à l'axe longitudinal (15), dans un boîtier (18 ; 18a) de l'unité de réglage de pression (16 ; 16a).

4. Unité de réglage de pression selon l'une des revendications précédentes **caractérisée en ce que** le régulateur de pression (16 ; 16a) présente une chambre de pression (29 ; 29a) dans laquelle un piston de réglage de pression (30 ; 30a) peut être coulissé de manière étanche le long de l'axe longitudinal (15).

5. Unité de réglage de pression selon la revendication 4 **caractérisée en ce que** le piston de réglage de la pression (30 ; 30a) peut être disposé dans la chambre de pression (29 ; 29a) par l'exercice d'une force de serrage (F_{S}) agissant le long de l'axe longitudinal (15) de telle sorte qu'il ferme le canal de liaison (23, 24) de manière étanche aux fluides.

6. Unité de réglage de pression selon l'une des revendications 4 ou 5 **caractérisée en ce que** la chambre de pression (29 ; 29a) présente une chambre de pression souhaitée (31 ; 31a), avec la pression souhaitée (pₛₒₗₗ, et une chambre de contre pression (32 ; 32a), avec une contre pression (p_{gegen}), les chambres (31, 32 ; 31a, 32a) pouvant être reliées entre elles par l'intermédiaire d'un canal de réglage de pression (33) prévu dans le piston de réglage de pression (30 ; 30a).

7. Unité de réglage de pression selon la revendication 6 **caractérisée en ce qu'**un premier élément ressort (40 ; 40a) est disposé dans la chambre de contre pression (32 ; 32a) entre le siège du régulateur de pression (40 ; 40a) et le piston du réglage de pression (30 ; 30a) de telle sorte qu'une première force élastique (F₁) est orientée à l'opposé de la force de serrage (F_{S}).

8. Unité de réglage de pression selon l'une des revendications 6 ou 7 **caractérisée en ce qu'**un deuxième élément ressort (41 ; 41a) est disposé dans la chambre de pression souhaitée (31 ; 31a) entre le piston de réglage de pression (30 ; 30a) et un piston d'ajustement (28 ; 28a) de telle sorte qu'une deuxième force élastique (F₂) est orientée en direction de la force de serrage (F_{S}) et sert à l'ajustement d'une pression de sortie efficace dans la chambre de pression souhaitée (31 ; 31a).

9. Unité de réglage de pression selon l'une des revendications de 6 à 8 **caractérisée en ce que** la pression atmosphérique (pₐₜₘ) sert de contre pression (p_{gegen})·

10. Unité de réglage de pression selon l'une des revendications de 6 à 8 **caractérisée en ce que** la contre pression (p_{gegen}) est une pression d'eau (p_{wasser}) pouvant être ajustée.

11. Unité de réglage de pression selon l'une des revendications précédentes **caractérisée en ce que** le régulateur de pression (16 ; 16a), l'orifice d'entrée (14) et l'orifice de sortie (17) sont disposés dans le boîtier (18 ; 18a).

12. Unité de réglage de pression selon l'une des revendications précédentes **caractérisée en ce que** l'alésage (53) au niveau de la position d'étanchéité est rendue étanche aux fluides et, dans la position de purge, permet un flux de fluide à travers l'alésage (53) à partir de l'unité de réglage de pression (1 ; 1a) pour la purge.

13. Dispositif de préparation d'eau potable comprenant
a. une unité de réglage de pression (1 ; 1) selon l'une des revendications précédentes pour la délivrance de fluides à une pression souhaitée (pₛₒₗₗ) minorée.
b. un récipient de fluide couplé à l'unité de réglage de pression (1 ; 1a) pour l'alimentation du fluide à la pression réelle (pᵢₛₜ).
